# EUROPEAN PATENT APPLICATION

(11) **EP 4 397 690 A1**
(43) Date of publication of application: **10.07.2024**
(21) Application number: 22864446.4
(22) Date of filing: 26.08.2022
(51) Int. Cl.: C08G 63/60, C08L 27/06, C08L 67/02

(54) **POLYESTER-BASED PLASTICIZER, VINYL CHLORIDE-BASED RESIN COMPOSITION CONTAINING SAME, AND MOLDED ARTICLE THEREOF**

(30) Priority: 31.08.2021 JP 2021141502
(71) Applicant: ADEKA CORPORATION, Arakawa-ku Tokyo 116-8554 (JP)
(72) Inventor: FUKUMOTO, Yugo, Tokyo 116-8554 (JP); KATO, Yushi, Tokyo 116-8554 (JP); MIYAZAKI, Yuto, Tokyo 116-8554 (JP); SENGOKU, Tadashi, Tokyo 116-8554 (JP)
(74) Representative: Müller-Boré & Partner Patentanwälte PartG mbB
(86) International application number: PCT/JP2022/032276
(87) International publication number: WO 2023/032862

(57) **Abstract**

Provided are a polyester-based plasticizer which is excellent in cold resistance, non-migration, oil extraction resistance, volatility resistance and the like in a well-balanced manner, which particularly allows a molded article to be excellent in oil extraction resistance and transparency, and which can be produced from a biomass resource, and a vinyl chloride-based resin composition containing the polyester-based plasticizer and a molded article thereof. A polyester-based plasticizer obtained from a dibasic acid component (A), a glycol component (B), a hydroxy acid component (C), and an end termination component (D), wherein the component (A) is one or more selected from the group consisting of sebacic acid, azelaic acid and succinic acid, the component (B) is one or more selected from the group consisting of 1,2-propylene glycol, 1,3-propylene glycol, 1,3-butanediol and 1,4-butanediol, the component (C) is 12-hydroxystearic acid, and the end termination component (D) is one or more selected from the group consisting of a monovalent fatty acid having 8 to 12 carbon atoms and a linear monohydric alcohol having 6 to 10 carbon atoms.

## Description

### TECHNICAL FIELD

The present invention relates to a polyester-based plasticizer, a vinyl chloride-based resin composition containing the polyester-based plasticizer (hereinafter, also simply referred to as "resin composition"), and a molded article thereof, specifically relates to a polyester-based plasticizer which is excellent in performances such as cold resistance, non-migration, oil extraction resistance and volatility resistance in a well-balanced manner, which particularly allows a molded article to be excellent in oil extraction resistance and transparency, and which can be produced from a biomass resource, a vinyl chloride-based resin composition containing the polyester-based plasticizer, and a molded article thereof.

### BACKGROUND ART

Plasticizers are widely used in order that these are added to various synthetic resins including vinyl chloride-based resins to not only allow these synthetic resins to be decreased in melt-viscosity and be easily molded and processed, but also impart performances such as flexibility and elasticity to these synthetic resins, thereby adapting these synthetic resins to various applications. Such plasticizers, although monomeric plasticizers such as dioctyl phthalate and dioctyl adipate are common, are inferior in volatility resistance, and therefore polyester-based plasticizers high in molecular weight as compared with such plasticizers are used.

However, plasticizers are demanded to have several performances such as volatility resistance, extraction resistance, and cold resistance, and all of these performances have been difficult to satisfy by conventional polyester-based plasticizers.

For example, polyester-based plasticizers, while may be decreased in molecular weight in order to have enhanced cold resistance (flexibility) at low temperatures, are deteriorated in properties such as non-migration, oil extraction resistance and volatility resistance according to such a decrease in molecular weight. On the contrary, these plasticizers, while can be increased in molecular weight and thus improved in properties such as non-migration, oil extraction resistance and volatility resistance, are not only increased in viscosity and inferior in handling workability, but also deteriorated in properties such as cold resistance.

Trials for improvement have been conducted by devising constituent components of polyester-based plasticizers, in addition to molecular weight design. For example, Patent Document 1 has proposed a polyester-based plasticizer in which a monovalent carboxylic acid having a side chain at a proportion of 30% or greater at the α-position is used as a condensation component of the polyester. Furthermore, Patent Document 2 has proposed a polyester-based plasticizer in which 2-methyl-1,8-octanediol is used as a condensation component of the polyester. These plasticizers have been considered to be capable of leading to improvement of the imbalance between cold resistance and other physical properties, but such improvement has not been sufficient.

Some plasticizers may impair transparency in applications in which molded articles are needed to have transparency, and there is a need for a plasticizer not to impair transparency.

On the other hand, vinyl chloride-based resins are also used in food packaging applications, hoses for transporting oils (also referred to as "oil-resistant hoses"), and the like, and, for example, a large amount of polyvinyl chloride-based stretch films have been recently used as films for food packaging of dressed meats, fresh fishes, fruits and vegetables, prepared foods, and the like in food stores of department stores, supermarkets, and the like. Such films for food packaging, containers and oil-resistant hoses are brought into contact with oils, and thus a problem has been that plasticizers used for polyvinyl chloride-based resins are transferred to oils. Moreover, transparency is needed in order that contents packaged or oils in hoses to be well viewed. Furthermore, these films, containers and hoses are for single use or for easily disposable/bumable, and have been problematic also from the viewpoint of carbon neutrality.

In particular, according to growing calls for creation of a recycling society in recent years, there has been a demand for departure from fossil fuel resources such as petroleum-based raw materials in the material field, as in the energy field. In particular, there are global environmental issues such as concerns about fossil fuel resource depletion and carbon dioxide increase in the air, and biomass resources have attracted attention from the viewpoint of carbon neutrality.

### RELATED ART DOCUMENTS

### PATENT DOCUMENTS

[Patent Document 1] JP S61-41936 B
[Patent Document 2] JP H10-45882 A

### SUMMARY OF THE INVENTION

### PROBLEMS TO BE SOLVED BY THE INVENTION

However, a conventional polyester-based plasticizer has performances such as cold resistance, non-migration, oil extraction resistance and volatility resistance in an ill-balance manner and cannot satisfy all required performances, and is currently demanded to be further improved. Such a conventional polyester-based plasticizer has also had the problem of having an adverse effect on transparency in an application in which transparency of a molded article is needed. There is also a demand for a polyester-based plasticizer which not only satisfies various required performances, but also is obtained from a biomass resource.

An object of the present invention is to provide a polyester-based plasticizer which is excellent in performances such as cold resistance, non-migration, oil extraction resistance and volatility resistance in a well-balanced manner, which particularly allows a molded article to be excellent in oil extraction resistance and transparency, and which can be produced from a biomass resource, a vinyl chloride-based resin composition containing the polyester-based plasticizer, and a molded article thereof. Another object of the present invention is to provide a vinyl chloride-based resin composition containing the plasticizer, and a molded article thereof, in particular, a food packaging film and an oil-resistant hose.

### MEANS FOR SOLVING THE PROBLEMS

The present inventors have made intensive studies in order to solve the above problems, and as a result, have found that the above problems can be solved by a polyester-based plasticizer including particular dibasic acid, glycol component, hydroxy acid component, and end termination component, leading to completion of the present invention.

That is, the polyester-based plasticizer of the present invention is a polyester-based plasticizer obtained from a dibasic acid component (A), a glycol component (B), a hydroxy acid component (C), and an end termination component (D), wherein the dibasic acid component (A) is one or more selected from the group consisting of sebacic acid, azelaic acid and succinic acid, the glycol component (B) is one or more selected from the group consisting of 1,2-propylene glycol, 1,3-propylene glycol, 1,3-butanediol and 1,4-butanediol, the hydroxy acid component (C) is 12-hydroxystearic acid, and the end termination component (D) is one or more selected from the group consisting of a monovalent fatty acid having 8 to 12 carbon atoms and a linear monohydric alcohol having 6 to 10 carbon atoms.

In the polyester-based plasticizer of the present invention, the glycol component (B) is preferably 1,2-propylene glycol. In the polyester-based plasticizer of the present invention, a number average molecular weight is preferably 500 to 10,000. In the polyester-based plasticizer of the present invention, the dibasic acid component (A), the glycol component (B), the hydroxy acid component (C), and the end termination component (D) are each preferably obtained from a biomass resource.

The vinyl chloride-based resin composition of the present invention contains the polyester-based plasticizer of the present invention.

The vinyl chloride-based resin composition of the present invention can be suitably used in a food packaging application or an oil-resistant hose application.

The molded article of the present invention includes the vinyl chloride-based resin composition of the present invention.

The molded article of the present invention can be suitably used for a food packaging film or an oil-resistant hose.

### EFFECTS OF THE INVENTION

According to the present invention, there can be provided a polyester-based plasticizer which is excellent in performances such as cold resistance, non-migration, oil extraction resistance, and volatility resistance in a well-balanced manner, which particularly allows a molded article to be excellent in oil extraction resistance and transparency, and which can be produced from a biomass resource, a vinyl chloride-based resin composition containing the polyester-based plasticizer, and a molded article thereof. Furthermore, according to the present invention, there can be provided a vinyl chloride-based resin composition containing the plasticizer, and a molded article thereof, in particular, a food packaging film and an oil-resistant hose.

### MODE FOR CARRYING OUT THE INVENTION

Hereinafter, embodiments of the present invention are described in detail.

First, the polyester-based plasticizer of the present invention is described. The polyester-based plasticizer of the present invention is a polyester-based plasticizer obtained from a dibasic acid component (A), a glycol component (B), a hydroxy acid component (C), and an end termination component (D).

In the polyester-based plasticizer of the present invention, the dibasic acid component (A) is one or more selected from the group consisting of sebacic acid, azelaic acid and succinic acid, the glycol component (B) is one or more selected from the group consisting of 1,2-propylene glycol, 1,3-propylene glycol, 1,3-butanediol and 1,4-butanediol, the hydroxy acid component (C) is 12-hydroxystearic acid, and the end termination component (D) is one or more selected from the group consisting of a monovalent fatty acid having 8 to 12 carbon atoms and a linear monohydric alcohol having 6 to 10 carbon atoms. Thus, a polyester-based plasticizer can be obtained which is excellent in performances such as cold resistance, non-migration, oil extraction resistance and volatility resistance in a well-balanced manner and which particularly allows a molded article to be excellent in oil extraction resistance and transparency.

As described above, the dibasic acid component (A) in the polyester-based plasticizer of the present invention is one or more selected from the group consisting of sebacic acid, azelaic acid, and succinic acid, and is preferably sebacic acid in terms of cold resistance, non-migration, oil extraction resistance and volatility resistance, in particular, oil extraction resistance and transparency of a molded article.

The dibasic acid component may also be a dibasic acid derivative, and examples of the derivative include carboxylic acid anhydride, carboxylates (for example, alkyl carboxylates such as methyl carboxylate), alkyl metal carboxylates (for example, sodium carboxylate), and carboxylic acid halides (for example, carboxylic acid chloride). Sebacic acid, azelaic acid and succinic acid, serving as the dibasic acid component (A), are each preferably obtained from a biomass resource in terms of carbon neutrality.

Any dibasic acid can also be used, in addition to the dibasic acid component (A), in the polyester-based plasticizer of the present invention, as long as the effects of the present invention are not impaired. Examples of such dibasic acid include malonic acid, glutaric acid, adipic acid, pimelic acid, suberic acid, undecanedioic acid, dodecanedioic acid, phthalic acid, isophthalic acid, and terephthalic acid.

The glycol component (B) in the polyester-based plasticizer of the present invention is one or more selected from the group consisting of 1,2-propylene glycol, 1,3-propylene glycol, 1,3-butanediol, and 1,4-butanediol, and is preferably 1,2-propylene glycol in terms of cold resistance, non-migration, oil extraction resistance, and volatility resistance, in particular, oil extraction resistance and transparency of a molded article.

1,2-Propylene glycol, 1,3-propylene glycol, 1,3-butanediol, and 1,4-butanediol, serving as the glycol component (B), are each preferably obtained from a biomass resource in terms of carbon neutrality.

Any glycol can also be used, in addition to the glycol component (B), in the polyester-based plasticizer of the present invention, as long as the effects of the present invention are not impaired. Examples of such any glycol include ethylene glycol, 1,2-butanediol, 2-methyl-1,3-propanediol, neopentyl glycol, 1,5-pentanediol, 3-methyl-1,5-pentanediol, 1,6-hexanediol, 2,2-diethyl-1,3-propanediol, 2,2,4-trimethyl-1,3-pentanediol, 2-ethyl-1,3-hexanediol, 1,9-nonanediol, 2-methyl-1,8-octanediol, 1,10-decanediol, 2-butyl-2-ethyl-1,5-propanediol, 1,12-octadecanediol, diethylene glycol, and dipropylene glycol.

The hydroxy acid component (C) in the polyester-based plasticizer of the present invention is 12-hydroxystearic acid. 12-Hydroxystearic acid is used, and therefore cold resistance, non-migration, oil extraction resistance, and volatility resistance, in particular, oil extraction resistance and transparency of a molded article are excellent.

12-Hydroxystearic acid serving as the hydroxy acid component (C) is preferably one obtained from a biomass resource.

Any hydroxy acid can also be used, in addition to 12-hydroxystearic acid serving as the hydroxy acid component (C), in the polyester-based plasticizer of the present invention, as long as the effects of the present invention are not impaired. Examples of such hydroxy acid include lactic acid, ricinoleic acid, and glycolic acid.

The end termination component (D) in the polyester-based plasticizer of the present invention is one or more selected from the group consisting of a monovalent fatty acid having 8 to 12 carbon atoms and a linear monohydric alcohol having 6 to 10 carbon atoms.

The end termination component (D) is preferably one or more selected from the group consisting of a monovalent fatty acid having 8 to 12 carbon atoms, in terms of cold resistance, non-migration, oil extraction resistance, and volatility resistance, in particular, oil extraction resistance and transparency of a molded article. The monovalent fatty acid having 8 to 12 carbon atoms is preferably octanoic acid, nonanoic acid, decanoic acid, or dodecanoic acid, more preferably octanoic acid, in terms of cold resistance, non-migration, oil extraction resistance and volatility resistance, in particular, oil extraction resistance and transparency of a molded article.

The monovalent fatty acid having 8 to 12 carbon atoms, serving as the end termination component (D), is preferably one obtained from a biomass resource in terms of carbon neutrality.

Any monovalent fatty acid can also be used, in addition to the monovalent fatty acid having 8 to 12 carbon atoms serving as end termination component (D), in the polyester-based plasticizer of the present invention, as long as the effects of the present invention are not impaired. Examples of such monovalent fatty acid include myristic acid, palmitic acid, stearic acid, oleic acid, and linoleic acid.

Examples of the linear monohydric alcohol having 6 to 10 carbon atoms, serving as the end termination component (D), include 1-hexanol, 1-heptanol, 1-octanol, 1-nonanol, and 1-decanol.

The linear monohydric alcohol having 6 to 10 carbon atoms, serving as the end termination component (D), is preferably one obtained from a biomass resource.

Any alcohol can also be used, in addition to the linear monohydric alcohol having 6 to 10 carbon atoms, serving as the end termination component (D), in the polyester-based plasticizer of the present invention, as long as the effects of the present invention are not impaired. Examples of such alcohol include 1-butanol, isobutanol, sec-butanol, tert-butanol, isohexanol, isooctanol, 2-ethylhexanol, isononanol, 2-methyloctanol, isodecanol, undecanol, lauryl alcohol, tridecanol, tetradecanol, hexadecanol, and stearyl alcohol.

A trihydric or higher polyhydric alcohol and a polybasic acid, such as glycerin, diglycerin, trimethylolpropane, pentaerythritol, dipentaerythritol, trimellitic acid, and pyromellitic acid, can also be used as any component(s) in the polyester-based plasticizer of the present invention, as long as the effects of the present invention are not impaired.

The dibasic acid component (A), the glycol component (B), the hydroxy acid component (C), and the end termination component (D) in the present invention are each preferably obtained from a biomass resource in terms of carbon neutrality. Such one obtained from a biomass resource, in the polyester-based plasticizer of the present invention, encompasses not only one directly obtained from a biomass resource, but also one obtained by extraction, fermentation, chemical reaction and/or the like with a biomass resource as a raw material. Herein, the "biomass resource" refers to a simple plant, animal or microorganism, or a resource obtained therefrom, and does not encompass any one derived from fossil fuel such as petroleum, coal, or natural gas.

Examples of a preferred biomass resource include a plant resource, and examples of a preferred plant include tree (wood), sunflower, colza, rapeseed, corn, linseed, ricinus, jojoba, peanut, coconut, thistle, castor, soybean, palm, hemp, poppy, olive, safflower, sugar cane, sugar beet, and various grains such as rice, wheat, barley, grain oats, cassava and potato, and algae.

Examples of the animal resource include livestock such as cow, pig, horse and sheep, and marine resources such as sardine, herring, and krill.

Those obtained from microorganisms such as yeast and bacteria are also encompassed in a biomass resource.

Specific examples of a biomass resource obtained from the plant resource further preferably include vegetable fats and oils, such as lignin oil, sunflower oil, colza oil, rapeseed oil, corn oil, hempseed oil, olive oil, linseed oil, castor oil, soybean oil, coconut oil, palm oil, palm kernel oil, safflower oil, rice oil, poppy oil and jojoba oil, sugar such as glucose, sucrose and fructose, polysaccharides such as starch, glycogen, cellulose, α-glucan, β-glucan, curdlan, paramylum, chitin and dextran, and lignin.

Sebacic acid, azelaic acid and succinic acid, serving as the dibasic acid component (A), are each preferably obtained from a biomass resource in terms of carbon neutrality, examples of a preferred biomass resource for sebacic acid include castor oil, examples for azelaic acid include oleic acid obtained from vegetable fat and oil such as safflower oil, olive oil, colza oil, palm oil and rice oil, and these acids are each obtained by ozone oxidation (also referred to as "ozonolysis") of such oleic acid. Examples of a preferred biomass resource for succinic acid include sugar.

1,2-Propylene glycol, 1,3-propylene glycol, 1,3-butanediol, and 1,4-butanediol, serving as the glycol component (B), are each preferably obtained from a biomass resource in terms of carbon neutrality, and examples of a preferred biomass resource for 1,2-propylene glycol include soybean and colza oil, examples thereof for 1,3-propylene glycol include palm oil, examples thereof for 1,3-butanediol include palm oil and examples thereof for 1,4-butanediol include sugar.

12-Hydroxystearic acid serving as the hydroxy acid component (C) is preferably obtained from a biomass resource in terms of carbon neutrality, and examples of a preferred biomass resource include castor oil.

The monovalent fatty acid having 8 to 12 carbon atoms, serving as the end termination component (D), for example, octanoic acid, nonanoic acid, decanoic acid or dodecanoic acid is preferably obtained from a biomass resource in terms of carbon neutrality, and examples of a preferred biomass resource include coconut oil and palm oil.

The linear monohydric alcohol having 6 to 10 carbon atoms, serving as the end termination component (D), for example, 1-hexanol, 1-heptanol, 1-octanol, 1-nonanol or 1-decanol is preferably obtained from a biomass resource in terms of carbon neutrality, and examples of a preferred biomass resource include corn and palm oil.

The component ratio among the dibasic acid component (A), the glycol component (B), the hydroxy acid component (C) and the end termination component (D) in the polyester-based plasticizer of the present invention preferably satisfies 20 to 70% by mass of the dibasic acid component (A), 15 to 50% by mass of the glycol component (B), 5 to 40% by mass of the hydroxy acid component (C), and 3 to 50% by mass of the end sealing component (D), more preferably 30 to 60% by mass of the dibasic acid component (A), 20 to 40% by mass of the glycol component (B), 10 to 30% by mass of the hydroxy acid component (C), and 5 to 40% by mass of the end termination component (D), in terms of not only cold resistance, non-migration, oil extraction resistance and volatility resistance, but also transparency of a molded article.

The number average molecular weight of the polyester-based plasticizer of the present invention is preferably 500 to 10,000, more preferably 800 to 7,000, still more preferably 1,000 to 4,500 in terms of not only cold resistance, non-migration, oil extraction resistance, and volatility resistance, but also oil extraction resistance and transparency of a molded article. A number average molecular weight of less than 500 is not preferred in terms of volatility resistance and oil extraction resistance, and a number average molecular weight of greater than 10,000 is not preferred in terms of cold resistance and workability. The method for measuring the number average molecular weight of the polyester-based plasticizer of the present invention is preferably a measurement method by GPC, and the measurement method is shown below.

### <Method for measuring number average molecular weight by GPC>

A sample obtained by dissolving 50 mg of a specimen in THF10 mL is subjected to peak partition analysis in a differential refractive index detector with Semi-micro GPC column (SHODEX KF-402.5 manufactured by Showa Denko K.K.), and the average molecular weight is calculated in terms of polystyrene.

The viscosity at 25°C of the polyester-based plasticizer of the present invention is preferably 50 to 20,000 mPa·s, more preferably 100 to 10,000 mPa. s, still more preferably 100 to 6,000 mPa·s in terms of not only cold resistance, non-migration, oil extraction resistance and volatility resistance, but also oil extraction resistance and transparency of a molded article. A viscosity of less than 50 mPa·s is not preferred in terms of volatility resistance and oil extraction resistance, and a viscosity of greater than 20,000 mPa·s is not preferred in terms of cold resistance and workability. The method for measuring the viscosity of the polyester-based plasticizer of the present invention is preferably a measurement method with a B-type viscometer, and the measurement method is shown below.

### <Method for measuring viscosity with B-type viscometer>

After a rotor and a measurement container depending on the viscosity of a measurement specimen are attached to a B-type viscometer, the measurement container is immersed in a constant-temperature water tank set at 25°C. The specimen is left to still stand until the constant temperature is achieved, and the number of rotations is selected depending on the viscosity. Measurement is performed for a defined time, and a measurement value automatically calculated and digitally displayed is read.

The acid value of the polyester-based plasticizer of the present invention is preferably 0 to 10.0, more preferably 0 to 3.0, still more preferably 0 to 2.0 in terms of not only cold resistance, non-migration, oil extraction resistance, and volatility resistance, but also oil extraction resistance and transparency of a molded article. The method for measuring the acid value of the polyester-based plasticizer of the present invention may be the following measurement method.

### <Method for measuring acid value>

A specimen is precisely weighed down to ten milligrams in a container, and sufficiently dissolved in a neutral toluene/ethanol solution. Several droplets of a phenolphthalein indicator are added and titration is made with an aqueous 0.1 N KOH solution.

The hydroxy value of the polyester-based plasticizer of the present invention is preferably 0 to 30.0, more preferably 3.0 to 20.0 in terms of not only cold resistance, non-migration, oil extraction resistance, and volatility resistance, but also oil extraction resistance and transparency of a molded article. The method for measuring the hydroxy value may be the following measurement method.

### <Method for measuring hydroxy value>

A specimen is precisely weighed down to ten milligrams in a container, and sufficiently dissolved in 10 mL of TEP (triethyl phosphate). After 15 mL of a reagent A is added and sufficiently stirred, 20 mL of a reagent D is added and left to still stand for 5 minutes. Fifty mL of a neutral isopropyl alcohol is added, and several droplets of a phenolphthalein indicator are added and titration is made with an aqueous 1.0 N KOH solution.

The method for producing the polyester-based plasticizer of the present invention is not particularly limited, and a known method for producing a polyester can be used. In other words, the components (A) to (D), and, if necessary, any component(s) may be subjected to esterification reaction. A catalyst may be used in the esterification reaction. The pressure may be increased or reduced in the reaction, and the reaction temperature in the esterification reaction is preferably 150 to 250°C, more preferably 180 to 230°C.

After termination of the esterification reaction, an operation for removal of a low-molecular weight component can also be, if necessary, performed. Examples of the method for removing such a low-molecular weight component include a thin-film distillation method, a column method, and membrane separation, and a thin-film distillation method is preferred.

Examples of an esterification catalyst usable for production of the polyester-based plasticizer of the present invention include acidic catalysts such as sulfuric acid, phosphoric acid, zinc chloride, benzenesulfonic acid, p-toluenesulfonic acid and 4-chlorobenzenesulfonic acid; alkoxytitanium compounds such as tetramethoxytitanium, tetraethoxytitanium and tetraisopropoxytitanium; titanium acylate compounds such as polyhydroxytitanium stearate and polyisopropoxytitanium stearate; titanium chelate compounds such as titanium acetyl acetate, triethanolamine titanate, titanium ammonium lactate, titanium ethyl lactate and titanium octylene glycolate; tin compounds such as dibutyltin dilaurate, dibutyltin oxide and dibutyltin diacetate; metal acetates such as magnesium acetate, calcium acetate and zinc acetate; and metal oxides such as antimony oxide and zirconium oxide, and these are used singly or in combination thereof.

The polyester-based plasticizer of the present invention is preferably compounded in a vinyl chloride-based resin and then used as a vinyl chloride-based resin composition.

Next, the vinyl chloride-based resin composition of the present invention is described. The vinyl chloride-based resin composition of the present invention contains the polyester-based plasticizer of the present invention. The amount of compounding of the polyester-based plasticizer of the present invention in the vinyl chloride-based resin is preferably 5 to 200 parts by mass, more preferably 10 to 150 parts by weight, still more preferably 20 to 100 parts by weight based on 100 parts by mass of the vinyl chloride-based resin.

The vinyl chloride-based resin in the vinyl chloride-based resin composition of the present invention is not particularly limited in terms of a formation method thereof by polymerization such as bulk polymerization, solution polymerization, suspension polymerization or emulsion polymerization, and examples thereof can include vinyl chloride-based resins such as polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, a vinyl chloride-isoprene copolymer, a vinyl chloridechlorinated propylene copolymer, a vinyl chloride-vinylidene chloride-vinyl acetate terpolymer, a vinyl chloride-maleate copolymer, a vinyl chloride-methacrylate copolymer, a vinyl chlorideacrylonitrile copolymer and a vinyl chloride-each vinyl ether copolymer, and any blended product thereof, or other chlorine-free synthetic resins, for example, an acrylonitrile-styrene copolymer, an acrylonitrile-butadiene-styrene copolymer, an ethylene-vinyl acetate copolymer, an ethylene-ethyl (meth)acrylate copolymer, and a blended product, a block copolymer and a graft copolymer with polyester or the like,. Such vinyl chloride-based resins may be in the form of a mixture of two or more kinds thereof, or a mixture with other synthetic resin. The vinyl chloride-based resin used is preferably polyvinyl chloride in terms of not only cold resistance, non-migration, oil extraction resistance, and volatility resistance, but also transparency of a molded article.

A known plasticizer other than the polyester-based plasticizer of the present invention can also be used in combination with the vinyl chloride-based resin composition of the present invention as long as the effects of the present invention are not impaired.

Examples of the plasticizer other than the polyester-based plasticizer of the present invention include phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate-based plasticizers such as dioctyl adipate, diisononyl adipate, diisodecyl adipate and di(butyldiglycol)adipate; phosphate-based plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyl diphenyl phosphate; polyester-based plasticizers other than the polyester-based plasticizer of the present invention, in which an polyhydric alcohol such as ethylene glycol, diethylene glycol, triethylene glycol, 1,2-propylene glycol, 1,3-propylene glycol, 1,3-butanediol, 1,4-butanediol, 1,5-hexanediol, 1,6-hexanediol or neopentyl glycol, and a dibasic acid such as oxalic acid, malonic acid, succinic acid, glutaric acid, adipic acid, pimelic acid, suberic acid, azelaic acid, sebacic acid, phthalic acid, isophthalic acid or terephthalic acid are used; and other tetrahydrophthalic acid-based plasticizers, azelaic acid-based plasticizers, sebacic acid-based plasticizers, stearic acid -based plasticizers, citric acid-based plasticizers, trimellitic acid-based plasticizers, pyromellitic acid-based plasticizers and biphenylene polycarboxylic acid-based plasticizers.

The vinyl chloride-based resin composition of the present invention preferably contains a zinc salt of organic acid in terms of thermal stability. Examples of the zinc salt of organic acid include zinc salts of organic carboxylic acids, phenols, organophosphorus acids, or the like.

Examples of such organic carboxylic acids include monovalent carboxylic acids such as acetic acid, propionic acid, butyric acid, valeric acid, caproic acid, enanthic acid, caprylic acid, pelargonic acid, 2-ethylhexyl acid, neodecanic acid, capric acid, undecanic acid, isoundecylic acid, lauric acid, isolauric acid, tridecanic acid, myristic acid, isomyristic acid, palmitic acid, isopalmitic acid, isostearic acid, stearic acid, 12-hydroxystearic acid, behenic acid, montanic acid, versatic acid, benzoic acid, monochlorobenzoic acid, 4-tert-butylbenzoic acid, dimethylhydroxybenzoic acid, 3,5-di-tert-butyl-4-hydroxybenzoic acid, o-toluic acid, m-toluic acid, p-toluic acid, toluic acid, dimethylbenzoic acid, 2,4-dimethylbenzoic acid, 3,5-dimethylbenzoic acid, 2,4,6-trimethylbenzoic acid, ethylbenzoic acid, 2-ethylbenzoic acid, 3-ethylbenzoic acid, 4-ethylbenzoic acid, 2,4,6-triethylbenzoic acid, 4-isopropylbenzoic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linoleic acid, linolenic acid, myristoleic acid, palmitoleic acid, eleostearic acid, eicosenoic acid, eicosadiene acid, eicosatrienoic acid, eicosatetraenoic acid, arachidonic acid, docosapentaenoic acid, docosahexaenoic acid, ricinoleic acid, thioglycol acid, mercaptopropionic acid and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid and thiodipropionic acid, or monoester or monoamide compounds thereof; and dior tri-ester compounds of trivalent or tetravalent carboxylic acids such as butanetricarboxylic acid, butanetetracarboxylic acid, hemimellitic acid, trimellitic acid, mellophanic acid and pyromellitic acid.

Examples of such phenols include tert-butyl phenol, nonyl phenol, dinonyl phenol, cyclohexyl phenol, phenyl phenol, octyl phenol, phenol, cresol, xylenol, n-butyl phenol, isoamyl phenol, ethyl phenol, isopropyl phenol, isooctyl phenol, 2-ethylhexyl phenol, tertnonyl phenol, decyl phenol, tert-octyl phenol, isohexyl phenol, octadecyl phenol, diisobutyl phenol, methyl propyl phenol, diamyl phenol, methyl isohexyl phenol, and methyl tert-octyl phenol.

Examples of such organophosphorus acids include mono- or di-octylphosphoric acid, mono- or di-dodecylphosphoric acid, mono- or di-octadecylphosphoric acid, mono- or di-(nonylphenyl)phosphoric acid, nonylphenyl phosphonate, and stearyl phosphonate.

The zinc salt of organic acid may be an acidic salt, a neutral salt, a basic salt, or an overbasic complex obtained by partially or fully neutralizing a base of a basic salt by carbonic acid.

The zinc salt of organic acid may be constituted from two or more organic acids. For example, in the case of a zinc salt with a monovalent organic acid, organic acids which are the same as each other may form an anion site to form a salt with divalent zinc forming a cation site, or two different monovalent organic acids may form an anion site to form a salt with divalent zinc forming a cation site.

The zinc salt is preferably zinc benzoate, zinc toluate, zinc 4-tert-butyl benzoate, zinc stearate, zinc laurate, zinc versatate, zinc octylate, zinc oleate, zinc palminate, or zinc myristate in terms of thermal stability. The zinc salt of organic acid may be used singly or in combination of two or more kinds thereof.

The vinyl chloride-based resin composition of the present invention preferably contains one or more selected from the group consisting of a barium salt of organic acid and overbasic barium carbonate, in terms of thermal stability.

First, the barium salt of organic acid is described. Examples of such a barium salt of organic acid include barium salts of organic carboxylic acids, phenols, organophosphorus acids, or the like.

Examples of such organic carboxylic acids include monovalent carboxylic acids such as acetic acid, propionic acid, butyric acid, valeric acid, caproic acid, enanthic acid, caprylic acid, pelargonic acid, 2-ethylhexyl acid, neodecanic acid, capric acid, undecanic acid, isoundecylic acid, lauric acid, isolauric acid, tridecanic acid, myristic acid, isomyristic acid, palmitic acid, isopalmitic acid, isostearic acid, stearic acid, 12-hydroxystearic acid, behenic acid, montanic acid, versatic acid, benzoic acid, monochlorobenzoic acid, 4-tert-butylbenzoic acid, dimethylhydroxybenzoic acid, 3,5-di-tert-butyl-4-hydroxybenzoic acid, o-toluic acid, m-toluic acid, p-toluic acid, toluic acid, dimethylbenzoic acid, 2,4-dimethylbenzoic acid, 3,5-dimethylbenzoic acid, 2,4,6-trimethylbenzoic acid, ethylbenzoic acid, 2-ethylbenzoic acid, 3-ethylbenzoic acid, 4-ethylbenzoic acid, 2,4,6-triethylbenzoic acid, 4-isopropylbenzoic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linoleic acid, linolenic acid, myristoleic acid, palmitoleic acid, eleostearic acid, eicosenoic acid, eicosadiene acid, eicosatrienoic acid, eicosatetraenoic acid, arachidonic acid, docosapentaenoic acid, docosahexaenoic acid, ricinoleic acid, thioglycol acid, mercaptopropionic acid and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid and thiodipropionic acid, or monoester or monoamide compounds thereof; and dior tri-ester compounds of trivalent or tetravalent carboxylic acids such as butanetricarboxylic acid, butanetetracarboxylic acid, hemimellitic acid, trimellitic acid, mellophanic acid, and pyromellitic acid.

Examples of such phenols include tert-butyl phenol, nonyl phenol, dinonyl phenol, cyclohexyl phenol, phenyl phenol, octyl phenol, phenol, cresol, xylenol, n-butyl phenol, isoamyl phenol, ethyl phenol, isopropyl phenol, isooctyl phenol, 2-ethylhexyl phenol, tertnonyl phenol, decyl phenol, tert-octyl phenol, isohexyl phenol, octadecyl phenol, diisobutyl phenol, methyl propyl phenol, diamyl phenol, methyl isohexyl phenol, and methyl tert-octyl phenol.

Examples of such organophosphorus acids include mono- or di-octylphosphoric acid, mono- or di-dodecylphosphoric acid, mono- or di-octadecylphosphoric acid, mono- or di-(nonylphenyl)phosphoric acid, nonylphenyl phosphonate, and stearyl phosphonate.

The barium salt of organic acid may be constituted from two or more organic acids. For example, in the case of a barium salt with a monovalent organic acid, organic acids which are the same as each other may form an anion site to form a salt with divalent barium forming a cation site, or two different monovalent organic acids may form an anion site to form a salt with divalent barium forming a cation site.

The barium salt of organic acid may be used singly or in combination of two or more kinds thereof. The barium salt of organic acid may be an acidic salt, a neutral salt, or a basic salt.

Next, the overbasic barium carbonate is described. The overbasic barium carbonate is a liquid overbasic carboxylate/carbonate complex of barium. This complex is different from a simple mixture of normal barium carboxylate and barium carbonate, and is a complex formed by some interaction of such normal barium carboxylate and barium carbonate and is characterized by not only having a high metal content, but also exhibiting a homogeneous liquid form in an organic solvent. This complex is constituted with normal barium carboxylate, barium carbonate, and a composite salt of barium carboxylate and carbonate, as constituent components, and exhibits a homogeneous liquid form in an organic solvent by formation of a so-called micelle-like structure in which normal barium carboxylate and the composite salt of barium carboxylate and carbonate are present around barium carbonate located at the center.

The liquid overbasic carboxylate/carbonate complex of barium can be produced by, for example, the production method described in JP 2004-238364 A.

Various commercially available complexes can be each used directly as the liquid overbasic carboxylate/carbonate complex of barium. Representative examples of such commercially available complexes include "Plastistab^{™} 2116" (overbasic barium oleate/carbonate complex: specific gravity 1.42 to 1.53, Ba = 33 to 36%), "Plastistab^{™} 2513" (overbasic barium oleate/carbonate complex: specific gravity 1.41 to 1.52, Ba=33 to 36%) and "Plastistab^{™} 2508" (overbasic barium oleate/carbonate complex: specific gravity 1.39 to 1.51, Ba = 33 to 36%) which are manufactured by AM Stabilizers Corporation in U.S.A.

Such overbasic barium carbonate may be used singly or in combination of two or more kinds thereof.

The vinyl chloride-based resin composition of the present invention can contain one or more selected from the group consisting of a calcium salt of organic acid and overbasic calcium carbonate, in terms of thermal stability.

Examples of such a calcium salt of organic acid include calcium salts of organic carboxylic acids, phenols, organophosphorus acids, or the like.

Examples of such organic carboxylic acids include those exemplified with respect to the barium salt. Examples of such phenols include those exemplified with respect to the barium salt. Examples of such organophosphorus acids include those exemplified with respect to the barium salt.

The calcium salt of organic acid may be constituted from two or more organic acids. For example, in the case of a calcium salt with a monovalent organic acid, organic acids which are the same as each other may form an anion site to form a salt with divalent calcium forming a cation site, or two different monovalent organic acids may form an anion site to form a salt with divalent calcium forming a cation site.

The calcium salt of organic acid may be used singly or in combination of two or more kinds thereof. The calcium salt of organic acid may be an acidic salt, a neutral salt, or a basic salt.

Next, the overbasic calcium carbonate is described. The overbasic calcium carbonate is a liquid overbasic carboxylate/carbonate complex of calcium. This complex is different from a simple mixture of normal calcium carboxylate and calcium carbonate, and is a complex formed by some interaction of such normal calcium carboxylate and calcium carbonate and is characterized by not only having a high metal content, but also exhibiting a homogeneous liquid form in an organic solvent. This complex is constituted with normal calcium carboxylate, calcium carbonate, and a composite salt of calcium carboxylate and carbonate, as constituent components, and exhibits a homogeneous liquid form in an organic solvent by formation of a so-called micelle-like structure in which normal calcium carboxylate and the composite salt of calcium carboxylate and carbonate are present around calcium carbonate located at the center.

The liquid overbasic carboxylate/carbonate complex of calcium can be produced by the same production method as that of the liquid overbasic carboxylate/carbonate complex of barium. Various commercially available complexes can be each used directly. Representative examples of such commercially available complexes include "Plastistab^{™} 2265" (overbasic calcium oleate/carbonate complex: specific gravity 1.04 to 1.09, Ca=10%) which is manufactured by AM Stabilizers Corporation in the US.

Such overbasic calcium carbonate may be used singly or in combination of two or more kinds thereof.

The vinyl chloride-based resin composition of the present invention can also contain a β-diketone compound in terms of thermal stability.

Examples of the β-diketone compound include acetylacetone, triacetylmethane, 2,4,6-heptatrione, butanoylacetylmethane, lauroylacetylmethane, palmitoylacetylmethane, stearoylbenzoylmethane, palmitoylbenzoylmethane, distearoylmethane, stearoylacetylmethane, phenylacetylacetylmethane, dicyclohexylcarbonylmethane, benzoylformylmethane, benzoylacetylmethane, dibenzoylmethane, octylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, ethyl acetoacetate, cyclohexane-1,3-dione, methyl 3,6-dimethyl-2,4-dioxycyclohexane-1 carboxylate, 2-acetylcyclohexanone, dimedone, and 2-benzoylcyclohexane, and a metal salt thereof can also be similarly used. Examples of the metal salt include lithium salts, sodium salts, potassium salts, calcium salts, zinc salts, magnesium salts, and aluminum salts. Preferred examples of the metal salt include acetylacetone calcium and acetylacetone zinc.

The β-diketone compound may be used singly or in combination of two or more kinds thereof. The β-diketone compound is particularly preferably dibenzoylmethane, stearoylbenzoylmethane, or acetylacetone zinc in terms of thermal stability.

The vinyl chloride-based resin composition of the present invention can contain one or more phosphite compounds in terms of thermal stability.

Examples of the phosphite compounds include trialkyl phosphite, dialkyl phosphite, dialkyl monoallyl phosphite, alkyl allyl phosphite, monoalkyl diallyl phosphite, diallyl phosphite, and triallyl phosphite. While triester or diester can be used in the resin composition of the present invention, triester is preferably used in terms of thermal stability. Alternatively, thioester can also be used.

Examples of the phosphite compounds include triphenyl phosphite, tricresyl phosphite, tris(2,4-di-tert-butylphenyl)phosphite, tris(nonylphenyl)phosphite, tris(dinonylphenyl)phosphite, tris(mono- and di-mixed nonylphenyl)phosphite, tris(2,4-di-tert-butylphenyl)phosphite, diphenyl phosphite, 2,2'-methylene-bis(4,6-di-tert-butylphenyl)octyl phosphite, 2,2'-methylene-bis(4,6-tert-butylphenyl)-2-ethylhexyl phosphite, 2,2'-methylene-bis(4,6-tert-butylphenyl)-octadecyl phosphite, 2,2'-ethylidene-bis(4,6-di-tert-butylphenyl)fluorophosphite, octyl diphenyl phosphite, diphenyl decyl phosphite, diphenyl(2-ethylhexyl)phosphite, di(decyl)monophenyl phosphite, diphenyl tridecyl phosphite, diphenyl(C12 to C15-mixed alkyl)phosphite, phenyl diisodecyl phosphite, phenylbis(isotridecyl)phosphite, triethyl phosphite, tributyl phosphite, tris(2-ethylhexyl)phosphite, tris(decyl)phosphite, trilauryl phosphite, tris(tridecyl)phosphite, trioleyl phosphite, tristearyl phosphite, diethyl phosphite, dibutyl phosphite, dilauryl phosphite, bis(2-ethylhexyl)phosphite, dioleyl phosphite, trilauryl trithiophosphite, bis(neopentyl glycol)-1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, distearyl pentaerythritol diphosphite, di(nonylphenyl)pentaerythritol diphosphite, di(tridecyl)pentaerythritol diphosphite, phenyl-4,4'-isopropylidene diphenol-pentaerythritol diphosphite, tetra(C12 to 15-mixed alkyl)-4,4'-isopropylidenediphenyl diphosphite, hydrogenated-4,4'-isopropylidene diphenol polyphosphite, bis(octylphenyl)-bis[4,4'-n-butylidene-bis(2-tert-butyl-5-methyl phenol)]·1,6-hexanediol· diphosphite, tetra(tridecyl)-4,4'-n-butylidene-bis(2-tert-butyl-5-methyl phenol) diphosphite, hexa(tridecyl)-1,1,3-tris(2-methyl-4-hydroxy-5-tert-butylphenyl)butane triphosphite, hexa(tridecyl). 1,1,3-tris(2-methyl-5-tert-butyl-4-hydroxyphenyl)butane· triphosphite, 9,10-dihydro-9-oxa-10-phosphaphenanthrene-10-oxide, 2-butyl-2-ethylpropanediol- 2,4,6-tri-tert-butyl phenol monophosphite, tris [2-tert-butyl-4-(3-tert-butyl-4-hydroxy-5-methylphenylthio)-5-methylphenyl]phosphite, tetra(tridecyl)isopropylidene diphenol diphosphite, tetrakis(2,4-di-tert-butylphenyl)biphenylene diphosphite, tris(2-[(2,4,8,10-tetrakis-tert-butyldibenzo[d,f][1,3,2]dioxaphosphepin-6-yl)oxy]ethyl)amine, and phosphite of 2-ethyl-2-butylpropylene glycol and 2,4,6-tri-tert-butyl phenol.

These phosphite compounds may be used singly or in combination of two or more kinds thereof. Among these phosphite compounds, a phosphite compound having 12 to 80 carbon atoms is preferably used, a phosphite compound having 12 to 46 carbon atoms is more preferably used, a phosphite compound having 12 to 36 carbon atoms is preferably used, and a phosphite compound having 18 to 30 carbon atoms is more preferably used, in terms of thermal stability.

The vinyl chloride-based resin composition of the present invention can also contain one or more phenol-based antioxidants in terms of thermal stability.

Examples of the phenol-based antioxidants include 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol bis[(3,5-di-tert-butyl-4-hydroxyphenyl)propionate], 1,6-hexamethylene-bis[(3,5-di-tert-butyl-4-hydroxyphenyl)propionate], 1,6-hexamethylene-bis[(3,5-di-tert-butyl-4-hydroxyphenyl)propionic acid amide], 4,4'-thiobis(6-tert-butyl-m-cresol), 2,2'-methylene-bis(4-methyl-6-tert-butyl phenol), 2,2'-methylene-bis(4-ethyl-6-tert-butyl phenol), bis[3,3-bis(4-hydroxy-3-tert-butylphenyl)butyric acid]glycol ester, 4,4'-butylidene-bis(6-tert-butyl-m-cresol), 2,2'-ethylidene-bis(4,6-di-tert-butyl phenol), 2,2'-ethylidene-bis(4-sec-butyl-6-tert-butyl phenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy}ethyl]-2,4,8,10-tetraoxaspiro[5.5]undecane, and triethylene glycol bis[(3-tert-butyl-4-hydroxy-5-methylphenyl)propionate]. Such phenol-based antioxidants may be used singly or in combination of two or more kinds thereof.

The vinyl chloride-based resin composition of the present invention can contain one or more hindered amine-based light stabilizers in terms of thermal stability.

Examples of the hindered amine-based light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malonate, 1,2,2,6,6-tetramethyl-4-piperidyl methacrylate, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], a 1,2,3,4-butanecarboxylic acid/2,2-bis(hydroxymethyl)-1,3-propanediol/3-hydroxy-2,2-dimethylpropanal/1,2,2,6,6-pentamethyl-4-piperidinyl ester polycondensate, a bis(1,2,2,6,6-pentamethyl-4-piperidyl)=decanedioate/methyl=1,2,2,6,6-pentamethyl-4-piperidyl=sebacate mixture, 2,2,6,6-tetramethyl-4-piperidyl methacrylate, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/dibromoethane polycondensate, a 1,6-bis(2,2,6,6-tetramethyl-4-piperidylamino)hexane/2,4-dichloro-6-morpholino-s-triazine polycondensate, a 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,1 1-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate. Such hindered amine-based light stabilizers may be used singly or in combination of two or more kinds thereof.

The vinyl chloride-based resin composition of the present invention can contain a leadbased stabilizer, a cadmium-based stabilizer, or a tin-based stabilizer, and preferably such a stabilizer is not compounded in terms of toxicity and an adverse effect on the environment.

The vinyl chloride-based resin composition of the present invention can also contain a hydrotalcite compound. Examples of the hydrotalcite compound include a compound represented by the following general formula (1).

Mgₓ₁Znₓ₂Al₂(OH)₂ₓ₁₊₂ₓ₂₊₄(CO₃)_{1-y1/2}(ClO₄)_{y1}mH₂O (1)

In the general formula (1), x1, x2 and y1 represent respective numbers satisfying conditions represented by the following expressions 0 ≤ x2/x1 < 10, 2 ≤ x1 + x2 < 20, and 0 ≤ y1 ≤ 2, and m represents 0 or any integer.

The hydrotalcite compound preferably used is a composite salt compound of magnesium and aluminum, or zinc, magnesium and aluminum. One obtained by dehydrating crystalline water may also be adopted. One treated with perchloric acid may also be adopted. Such a hydrotalcite compound may be a natural substance or may be a synthetic article. The hydrotalcite compound is not restricted in terms of crystal structure, crystal grain size, and the like.

The hydrotalcite compound used can be one whose surface is covered with a higher fatty acid such as stearic acid, a higher fatty acid metal salt such as alkali metal oleate, an organic sulfonic acid metal salt such as alkali metal dodecylbenzenesulfonate, a higher fatty acid amide, a higher fatty acid ester, wax, or the like.

The hydrotalcite-based compound may be used singly or in combination of two or more kinds thereof.

The vinyl chloride-based resin composition of the present invention can also contain a polyhydric alcohol compound. Examples of the polyhydric alcohol compound include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose, and lactose. The polyhydric alcohol compound may be used singly or in combination of two or more kinds thereof.

The vinyl chloride-based resin composition of the present invention can also contain a filler. Examples of the filler include calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, sodium aluminosilicate, hydrocalumite, aluminum silicate, magnesium silicate, calcium silicate, zeolite, activated white clay, talc, clay, colcothar, asbestos, antimony trioxide, silica, glass beads, mica, sericite, glass flake, wollastonite, potassium titanate, PMF, gypsum fibers, xonotlite, MOS, phosphate fibers, glass fibers, carbon fibers, and aramid fibers. Such fillers may be used singly or in combination of two or more kinds thereof.

The vinyl chloride-based resin composition of the present invention can also contain a lubricant in terms of processability. Examples of the lubricant include hydrocarbon-based lubricants such as low-molecular-weight wax, paraffin wax, polyethylene wax, chlorinated hydrocarbon and fluorocarbon; natural wax-based lubricants such as carnauba wax and candelilla wax; fatty acid -based lubricants, for example, higher fatty acids such as lauric acid, stearic acid and behenic acid, or oxy fatty acids such as hydroxystearic acid; aliphatic amidebased lubricants, for example, aliphatic amide compounds such as stearylamide, laurylamide and oleylamide, or alkylene bis-aliphatic amides such as methylene-bis-stearylamide and ethylene-bis-stearylamide; fatty acid alcohol ester-based lubricants, for example, fatty acid monohydric alcohol ester compounds such as stearyl stearate, butyl stearate and distearyl phthalate, or fatty acid polyhydric alcohol ester compounds such as glycerin tristearate, sorbitan tristearate, pentaerythritol tetrastearate, dipentaerythritol hexastearate, polyglycerin polyricinoleate and hydrogenated castor oil, or composite ester compounds of monovalent fatty acids and polybasic organic acids with polyhydric alcohols, such as adipic acid-stearic acid ester of dipentaerythritol; aliphatic alcohol-based lubricants such as stearyl alcohol, lauryl alcohol and palmityl alcohol; metallic soaps; montanoic acid-based lubricants such as partiallysaponified montanoic acid esters; acrylic lubricants; and silicone oil. Such lubricants may be used singly or in combination of two or more kinds thereof.

The vinyl chloride-based resin composition of the present invention can also contain a processing aid in terms of processability. Examples of the processing aid can include homopolymers or copolymers of alkyl methacrylates such as methyl methacrylate, ethyl methacrylate and butyl methacrylate; copolymers of the alkyl methacrylates with alkyl acrylates such as methyl acrylate, ethyl acrylate and butyl acrylate; copolymers of the alkyl methacrylates with aromatic vinyl compounds such as styrene, α-methylstyrene and vinyl toluene; and copolymers of the alkyl methacrylates with vinyl cyan compounds such as acrylonitrile and methacrylonitrile. Such processing aids may be used singly or in combination of two or more kinds thereof.

The vinyl chloride-based resin composition of the present invention can also be further compounded with other additive(s) commonly used for vinyl chloride-based resins, for example, a sulfur-based antioxidant, an epoxy compound, an ultraviolet absorber, an impact modifier, a reinforcing agent, a zeolite compound, a perchlorate compound, a magnesium salt of organic acid, overbasic magnesium carbonate, a flame retardant, a flame-retardant aid, a pigment, a stabilization aid, and/or the like.

Examples of the sulfur-based antioxidant include dialkyl thiodipropionates such as dilauryl thiodipropionate, dimyristyl thiodipropionate, myristyl stearyl thiodipropionate and distearyl thiodipropionate, and β-alkyl mercaptopropionates of polyols, such as pentaerythritol tetra(P-dodecylmercaptopropionate). Such sulfur-based antioxidants may be used singly or in combination of two or more kinds thereof.

Examples of the epoxy compound include epoxidized animal and plant oils, such as epoxidized soybean oil, epoxidized linseed oil, epoxidized tung oil, epoxidized fish oil, epoxidized beef tallow oil, epoxidized castor oil and epoxidized safflower oil, epoxidized tall oil fatty acid esters such as epoxidized tall oil fatty acid octyl, epoxidized linseed oil fatty acid esters such as epoxidized linseed oil fatty acid butyl, epoxidized methyl stearate, epoxidized butyl stearate, epoxidized 2-ethylhexyl stearate, epoxidized stearyl stearate, epoxidized polybutadiene, tris(epoxypropyl)isocyanurate, 3-(2-xenoxy)-1,2-epoxypropane, epoxidized polybutadiene, bisphenol-A diglycidyl ether, bisphenol-type and novolac-type epoxy resins, vinylcyclohexene diepoxide, dicyclohexene diepoxide, dicyclopentadiene diepoxide, 3,4-epoxycyclohexyl-6-methylepoxycyclohexane carboxylate, bis(3,4-epoxycyclohexyl)adipate, 3,4-epoxycyclohexylmethyl, and epoxycyclohexane carboxylate. Such epoxy compounds may be used singly or in combination of two or more kinds thereof.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylene-bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylene-bis(4-tert-octyl-6-benzotriazolyl)phenol, and polyethylene glycol ester of 2-(2-hydroxy-3-tert-butyl-5-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenyl acrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine and 2-(2-hydroxy-4-propoxy-5-methylphenyl)-4,6-bis(2,4-di-tert-butylphenyl)-s-triazine. Such ultraviolet absorbers may be used singly or in combination of two or more kinds thereof.

Examples of the impact modifier include polybutadiene, polyisoprene, polychloroprene, fluororubber, styrene-butadiene-based copolymer rubber, methyl methacrylate-butadiene-styrene-based copolymers, methyl methacrylate-butadiene-styrene-based graft copolymers, acrylonitrile-styrene-butadiene-based copolymer rubber, acrylonitrile-styrene-butadiene-based graft copolymers, styrene-butadiene-styrene block copolymer rubber, styrene-isoprene-styrene copolymer rubber, styrene-ethylene-butylene-styrene copolymer rubber, ethylene-propylene copolymer rubber, ethylene-propylene-diene copolymer rubber (EPDM), silicone-containing acrylic rubber, silicone/acrylic composite rubber-based graft copolymers, and silicone-based rubber. Examples of the diene of the ethylene-propylene-diene copolymer rubber (EPDM) can include 1,4-hexanediene, dicyclopentadiene, methylene norbornene, ethylidene norbornene, and propenyl norbornene. Such impact modifiers may be used singly or in combination of two or more kinds thereof.

The reinforcing agent used can be a fibrous, plated, granular, or powdery reinforcing agent commonly used for reinforcement of synthetic resins. Specific examples include inorganic fibrous reinforcing agents such as glass fibers, asbestos fibers, carbon fibers, graphite fibers, metal fibers, potassium titanate whiskers, aluminum borate whiskers, magnesium-based whiskers, silicon-based whiskers, wollastonite, sepiolite, asbestos, slag fibers, xonotlite, ellestadite, gypsum fibers, silica fibers, silica-alumina fibers, zirconia fibers, boron nitride fibers, silicon nitride fibers and boron fibers, organic fibrous reinforcing agents such as polyester fibers, nylon fibers, acrylic fibers, regenerated cellulose fibers, acetate fibers, kenaf, ramie, cotton, dute, hemp, sisal, flax, linen, silk, Manila hemp, sugarcane, wood pulp, wastepaper, recycled wastepaper and wool, and plated and granular reinforcing agents such as glass flake, non-swelling mica, graphite, metal foil, ceramic beads, clay, mica, sericite, zeolite, bentonite, dolomite, kaolin, fine powder silicic acid, feldspar powders, potassium titanate, shirasu balloon, calcium carbonate, magnesium carbonate, barium sulfate, calcium oxide, aluminum oxide, titanium oxide, aluminum silicate, silicon oxide, gypsum, novaculite, dawsonite and white clay. Such reinforcing agents may be each covered or bundled with a thermoplastic resin such as an ethylene/vinyl acetate copolymer, or a thermosetting resin such as an epoxy resin, or treated with a coupling agent such as aminosilane or epoxysilane. Such reinforcing agents may be used singly or in combination of two or more kinds thereof.

The zeolite compound is alkali or alkaline earth metal aluminosilicate having a unique three-dimensional zeolite crystal structure, representative examples thereof can include A-type, X-type, Y-type, and P-type zeolites, monodenite, analcite, sodalite-family aluminosilicates, clinoptilolite, erionite, and chabazite, the zeolite compound may be either a hydrate containing crystalline water (so-called zeolite water) or an anhydride in which crystalline water is removed, and one having a grain size of 0.1 to 50 µm can be used and in particular one having a grain size of 0.5 to 10 µm is preferred. Such zeolite compounds may be used singly or in combination of two or more kinds thereof.

Examples of the perchlorate compound include metal perchlorates, ammonium perchlorates, and perchloric acid-treated silicates. Examples of the metal constituting such a metal salt can include lithium, sodium, potassium, calcium, magnesium, strontium, barium, zinc, cadmium, lead, and aluminum. Such metal perchlorate may be an anhydride or a hydrate salt, or may be one dissolved in an alcohol-based or ester-based solvent such as butyl diglycol or butyl diglycol adipate, or a dehydrated product thereof. Such perchlorates may be used singly or in combination of two or more kinds thereof.

A magnesium salt of organic acid is described. Examples of the magnesium salt of organic acid include magnesium salts of organic carboxylic acids, phenols, organophosphorus acids, or the like.

Examples of such organic carboxylic acids include those exemplified with respect to the barium salt of organic acid. Examples of such phenols include those exemplified with respect to the barium salt of organic acid. Examples of such organophosphorus acids include those exemplified with respect to the barium salt of organic acid.

The magnesium salt of organic acid may be constituted from two or more organic acids. For example, in the case of a magnesium salt with a monovalent organic acid, organic acids which are the same as each other may form an anion site to form a salt with divalent magnesium forming a cation site, or two different monovalent organic acids may form an anion site to form a salt with divalent magnesium forming a cation site. The magnesium salt of organic acid may be used singly or in combination of two or more kinds thereof. The magnesium salt of organic acid may be an acidic salt, a neutral salt, or a basic salt.

The overbasic magnesium carbonate is described. The overbasic magnesium carbonate is a liquid overbasic carboxylate/carbonate complex of magnesium. This complex is different from a simple mixture of normal magnesium carboxylate and magnesium carbonate, and is a complex formed by some interaction of such magnesium, normal carboxylate and magnesium carbonate and is characterized by not only having a high metal content, but also exhibiting a homogeneous liquid form in an organic solvent. This complex is constituted with normal magnesium carboxylate, magnesium carbonate, and a composite salt of magnesium carboxylate and carbonate, as constituent components, and exhibits a homogeneous liquid form in an organic solvent by formation of a so-called micelle-like structure in which normal magnesium carboxylate and the composite salt of magnesium carboxylate and carbonate are present around magnesium carbonate located at the center.

The liquid overbasic carboxylate/carbonate complex of magnesium can be produced by the same production method as that of liquid overbasic liquid carboxylate/carbonate complex of barium. A commercially available complex can also be used directly.

Such overbasic magnesium carbonate may be used singly or in combination of two or more kinds thereof.

Examples of the flame retardant and the flame-retardant aid include triazine ring-containing compounds, metal hydroxides, other inorganic phosphorus, halogen-based flame retardants, silicon-based flame retardants, phosphate-based flame retardants, condensed phosphate-based flame retardants, intumescent-based flame retardants, antimony oxides such as antimony trioxide, other inorganic flame-retardant aids, and organic flame-retardant aids.

Examples of the triazine ring-containing compounds include melamine, ammeline, benzoguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the metal hydroxides include magnesium hydroxide, aluminum hydroxide, calcium hydroxide, barium hydroxide, zinc hydroxide, and KISUMA 5A (magnesium hydroxide: manufactured by Kyowa Chemical Industry Co., Ltd.).

Examples of the phosphate-based flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyl diphenyl phosphate, xylenyl diphenyl phosphate, trisisopropyl phenyl phosphate, 2-ethylhexyl diphenyl phosphate, t-butylphenyl diphenyl phosphate, bis-(t-butylphenyl)phenyl phosphate, tris-(t-butylphenyl)phosphate, isopropylphenyl diphenyl phosphate, bis-(isopropylphenyl)diphenyl phosphate, and tris-(isopropylphenyl)phosphate.

Examples of the condensed phosphate-based flame retardants include 1,3-phenylenebis(diphenyl phosphate), 1,3-phenylene-bis(dixylenyl phosphate), and bisphenol A bis(diphenyl phosphate), and examples of the intumescent-based flame retardants include ammonium salts and amine salts of (poly)phosphoric acids, such as ammonium polyphosphate, melamine polyphosphate, piperazine polyphosphate, ammonium pyrophosphate, melamine pyrophosphate, and piperazine pyrophosphate.

Examples of such other inorganic flame-retardant aids include inorganic compounds such as titanium oxide, aluminum oxide, magnesium oxide and talc, and surface-treated articles thereof, and, for example, various commercially available products such as TIPAQUE R-680 (titanium oxide: manufactured by Ishihara Sangyo Kaisha, Ltd.) and KYOWAMAG 150 (magnesium oxide: manufactured by Kyowa Chemical Industry Co., Ltd.) can be used.

These flame retardants and flame-retardant aids may be used singly or in combination of two or more kinds thereof.

Examples of the pigment include white pigments such as titanium dioxide, and blue pigments such as ultramarine blue and phthalocyanine blue.

The stabilization aid used is diphenylthiourea, anilinodithiotriazine, melamine, benzoic acid, cinnamic acid, p-tert-butylbenzoic acid, or the like.

The vinyl chloride-based resin composition of the present invention can be, if necessary, further compounded with additive(s) commonly used for vinyl chloride-based resins, such as a crosslinker, an antistatic agent, an anti-fogging agent, a plate-out inhibitor, a surface treatment agent, a fluorescent agent, an antifungal agent, an antibacterial agent, a metal inactivator, and/or a release agent, as long as the effects of the present invention are not impaired. Such components may be used singly or in combination of two or more kinds thereof.

The vinyl chloride-based resin composition of the present invention can be obtained as a mixed powder of the vinyl chloride-based resin composition by stirring and mixing the polyester-based plasticizer of the present invention, a vinyl chloride-based resin, and, if necessary, other component by a stirring machine such as a mortar mixer, a Henschel mixer, a Banbury mixer, or a ribbon blender.

A pellet-like vinyl chloride-based resin composition can also be obtained by melting and molding the polyester-based plasticizer of the present invention, a vinyl chloride-based resin, and, if necessary, other component by a kneader such as a conical twin-screw extruder, a parallel twin-screw extruder, a single screw extruder, a co-kneader-type kneader, or a roll kneader.

A paste-like vinyl chloride-based resin composition can also be obtained by uniformly stirring the polyester-based plasticizer of the present invention, a vinyl chloride-based paste resin, and, if necessary, other component by a mixing machine such as a pony mixer, a butterfly mixer, a planetary mixer, a ribbon blender, a kneader, a dissolver, a twin-screw mixer, a Henschel mixer, or a triple roll mill, and, if necessary, performing defoaming treatment under reduced pressure.

The vinyl chloride-based resin composition of the present invention is excellent in cold resistance, non-migration, oil extraction resistance, and volatility resistance, and furthermore allows the resulting molded article to be excellent in oil extraction resistance and transparency. Such characteristics enable the resin composition of the present invention to be suitably used particularly in a food packaging application and/or an oil-resistant hose.

Next, the molded article of the present invention is described.

The molded article of the present invention includes the vinyl chloride-based resin composition of the present invention, and a molded article obtained from the vinyl chloride-based resin composition of the present invention can be obtained as one molded into a desired shape, by melting, molding and processing the vinyl chloride-based resin composition according to the present invention (powdery or pellet-like one compounded) by a conventionally known method such as vacuum molding, compression molding, extrusion, injection molding, calendar molding, press molding, blow molding, or powder molding.

In this regard, such a paste-like vinyl chloride-based resin composition can be molded into a desired shape by molding and processing according to a conventionally known method such as spread molding, dipping molding, gravure molding, slash molding, or screen processing.

The shape of the molded article is not particularly limited, examples thereof include a rod-like shape, a sheet-like shape, a film-like shape, a plate-like shape, a cylindrical shape, a round shape, an elliptic shape, and examples thereof include a star shape and a polygonal shape.

The vinyl chloride-based resin composition of the present invention and the molded article obtained therefrom can be used in wide industrial fields of electricity, electronics and communication, agriculture, forestry and fisheries, mining, construction, food, fiber, clothing, medical care, coal, petroleum, rubber, leather, automobile, delicate equipment, wood, building material, civil engineering, furniture, printing, musical instrument, and the like.

More specifically, the vinyl chloride-based resin composition of the present invention and the molded article thereof can be used in applications of office/OA equipment such as printers, personal computers, word processors, keyboards, PDAs (small information terminals), telephones, copiers, facsimiles, ECRs (electronic cash registers), calculators, electronic notebooks, cards, holders and stationery, household electrical appliances such as washing machines, refrigerators, vacuum cleaners, microwave ovens, lighting instruments, game machines, clothes irons and Kotatsu, audio-video equipment such as TV, VTR, camcorders, radio-cassette players, tape recorders, mini discs, CD players, speakers and liquid crystal displays, electric and electronic components and communication equipment, such as connectors, relays, capacitors, switches, printed circuit boards, coil bobbins, semiconductor sealing materials, LED sealing materials, electric wires, cables, transformers, deflection yokes, distribution boards and clocks, interior and exterior materials for automobiles, films for plate making, pressure-sensitive adhesive films, bottles, containers for foods, films for food packaging, wrapping films for pharmaceutical/medical drugs, product packaging films, agricultural films, agricultural sheets, greenhouse films, and the like.

Furthermore, the resin composition of the present invention and the molded article thereof can be used in various applications of materials for automobiles, vehicles, marine vessels, aircrafts, buildings, houses, and architecture, and civil engineering materials, such as seats (fillings, outer materials, and the like), belts, ceilings, convertible tops, armrests, door trims, rear package trays, carpets, mats, sun visors, foil covers, mattress covers, airbags, insulating materials, straps, strap bands, wire covering materials, electric insulating materials, paints, coating materials, veneer materials, floor materials, baffle walls, carpets, wallpapers, wall decorating materials, exterior materials, interior materials, roof materials, deck materials, wall materials, pillar materials, floor boards, fences, frames and moldings, window and door shaping materials, shingles, sidings, building panels, terraces, balconies, soundproof boards, thermal insulating boards and window materials, and livingwares and sporting goods, such as clothing materials, curtains, sheets, nonwoven fabrics, plywood boards, synthetic fiber boards, rugs, doormats, partition curtains, sheets, buckets, hoses, powder transport hoses, containers, eye glasses, bags, casings, snow goggles, ski, rackets, tents and musical instruments.

In particular, the vinyl chloride-based resin composition of the present invention and the molded article obtained therefrom are excellent in oil extraction resistance and transparency, and thus can be suitably used in an application where these are contacted with oil and can be suitably used in, for example, containers for foods, films for food packaging, hoses to be contacted with oil such as food oil, oil-resistant hoses, stretch films for food packaging, and the like. A plasticizer obtained from a biomass resource can be used and thus can be suitably used, in terms of carbon neutrality, in containers for foods, films for food packaging, stretch films for food packaging, oil-resistant hoses, and the like which are likely subjected to single use or disposable.

### EXAMPLES

Hereinafter, the present invention is described in more detail with reference to Examples, but the present invention is not limited thereto.

The polyester-based plasticizer of the present invention was produced according to each of the following Production Examples. In the following Production Examples, the number average molecular weight of the polyester-based plasticizer was measured by the following <Method for measuring number average molecular weight>, the viscosity thereof was measured by the following <Method for measuring viscosity>, the acid value (mgKOH/g) thereof was measured by the following <Method for measuring acid value>, and the hydroxy value (mgKOH/g) thereof was measured by the following <Method for measuring hydroxy value>.

### <Method for measuring number average molecular weight>

A sample obtained by dissolving 50 mg of a specimen in THF10 mL was subjected to peak partition analysis in a differential refractive index detector with Semi-micro GPC column (SHODEX KF-402.5 manufactured by Showa Denko K.K.), and the average molecular weight was calculated in terms of polystyrene.

### <Method for measuring viscosity>

After a rotor and a measurement container depending on the viscosity of a measurement specimen were attached to a B-type viscometer, the measurement container was immersed in a constant-temperature water tank set at 25°C. The specimen was left to still stand until the constant temperature was achieved, and the number of rotations was selected depending on the viscosity. Thereafter, measurement was performed for a defined time, and a measurement value automatically calculated and digitally displayed was read.

### <Method for measuring acid value>

A specimen was precisely weighed down to the ten milligrams in a container, and sufficiently dissolved in a neutral toluene/ethanol solution. Several droplets of a phenolphthalein indicator were added and titration was made with an aqueous 0.1 N KOH solution.

### <Method for measuring hydroxy value>

A specimen was precisely weighed down to ten milligrams in a container, and sufficiently dissolved in 10 mL of TEP (triethyl phosphate). After 15 mL of a reagent A was added and sufficiently stirred, 20 mL of a reagent D is added and left to still stand for 5 minutes. Thereafter, 50 mL of a neutral isopropyl alcohol was added, and several droplets of a phenolphthalein indicator were added and titration was made with an aqueous 1.0 N KOH solution.

### <Production of polyester-based plasticizer>

### [Production Example 1]

A polyester-based plasticizer having a compositional ratio (% by mass) described in Table 1 was produced with component (A) to component (D) described in Table 1. In other words, a polyester-based plasticizer-1 of the present invention was obtained by esterification reaction under ordinary pressure/under reduced pressure at 200 to 230°C with dibutyltin oxide as a catalyst.

A raw material of sebacic acid, a raw material of 1,2-propylene glycol, a raw material of 12-hydroxystearic acid, and a raw material of octanoic acid, here used, were respectively castor oil, colza oil, castor oil, and coconut oil, and these were obtained from a biomass resource. The number average molecular weight, the viscosity, the acid value, and the hydroxy value of the resulting polyester-based plasticizer-1 were measured. The results are shown in Table 2.

### [Production Example 2]

A polyester-based plasticizer having a compositional ratio (% by mass) described in Table 1 was produced with component (A) to component (D) described in Table 1. In other words, a polyester-based plasticizer-2 of the present invention was obtained by esterification reaction under ordinary pressure/under reduced pressure at 200 to 230°C with dibutyltin oxide as a catalyst.

A raw material of sebacic acid, a raw material of 1,2-propylene glycol, a raw material of 12-hydroxystearic acid, and a raw material of octanoic acid, here used, were respectively castor oil, colza oil, castor oil, and coconut oil, and these were obtained from a biomass resource. The number average molecular weight, the viscosity, the acid value, and the hydroxy value of the resulting polyester-based plasticizer-2 were measured. The results are shown in Table 2.

### [Production Example 3]

A polyester-based plasticizer having a compositional ratio (% by mass) described in Table 1 was produced with component (A) to component (D) described in Table 1. In other words, a polyester-based plasticizer-3 of the present invention was obtained by esterification reaction under ordinary pressure/under reduced pressure at 200 to 230°C with dibutyltin oxide as a catalyst.

A raw material of sebacic acid, a raw material of 1,2-propylene glycol, a raw material of 12-hydroxystearic acid, and a raw material of octanoic acid, here used, were respectively castor oil, colza oil, castor oil, and coconut oil, and these were obtained from a biomass resource. The number average molecular weight, the viscosity, the acid value, and the hydroxy value of the resulting polyester-based plasticizer-3 were measured. The results are shown in Table 2.

### [Production Example 4]

A polyester-based plasticizer having a compositional ratio (% by mass) described in Table 1 was produced with component (A) to component (D) described in Table 1. A polyester-based plasticizer-4 of the present invention was obtained by esterification reaction under ordinary pressure/under reduced pressure at 200 to 230°C with dibutyltin oxide as a catalyst.

A raw material of sebacic acid, a raw material of 1,2-propylene glycol, a raw material of 12-hydroxystearic acid, and raw materials of dodecanoic acid, here used, were respectively castor oil, colza oil, castor oil, and coconut oil and palm oil, and these were obtained from a biomass resource. The number average molecular weight, the viscosity, the acid value, and the hydroxy value of the resulting polyester-based plasticizer-4 were measured. The results are shown in Table 2.

### [Examples 1 to 4 and Comparative Examples 1 to 3]

Each sheet was produced by compounding 100 parts by mass of a vinyl chloride-based resin (ZEST1000Z manufactured by SHINDAI-ICHI VINYL CORPORATION, average degree of polymerization 1050), 2.5 parts by mass of a barium/zinc-based liquid stabilizer (ADK STAB AC-285 manufactured by ADEKA), and each of the polyester-based plasticizers-1 to -4 of the present invention, described in Table 3 below, in an amount of compounding (parts by mass) described in Table 3 below, and roll-kneading them in conditions of 170°C × 30 rpm (rate of roll rotations) × 10 minutes (kneading time) × 0.7 mm (sheet thickness). Such each sheet obtained was used and the following tests were performed. The results are shown in Table 3.

Comparative plasticizers-1 to -3 were each used as a comparative plasticizer. The comparative plasticizer-1 was di-2-ethylhexyl phthalate (DOP), the comparative plasticizer-2 was bis(2-ethylhexyl) terephthalate (DOTP), and the comparative plasticizer-3 was epoxidized soybean oil (ADK CIZER O-130P manufactured by ADEKA). Each sheet was made in the same manner as in Examples, and subjected to the tests. The results are shown in Table 3.

### <Transparency test (Haze value)>

A plate made by stacking roll-kneaded sheets so that the thickness was 2 mm, and pressing the resultant at 180°C for 5 minutes, was subjected to measurement of the Haze value according to ISO13468 (D65). It can be said that a Haze value of less than 10 means excellent transparency. The results are shown in Table 3.

### <Cold resistance test (flexibility)>

Measurement was made with a Crushberg tester according to JIS K-6773 (1999). As the softening temperature (°C) is lower, the cold resistance is more excellent. The softening temperature here mentioned refers to a temperature as the low-temperature limit indicating a predetermined torsional rigidity modulus (3.17 × 103 kg/cm²) in the measurement. The results are shown in Table 3.

### <Non-migration test>

A roll-kneaded sheet was sandwiched between ABS plates, and any trace on the ABS plates after application of a load of 1 kg at 70°C for 72 hours was visually evaluated. It can be said that fewer traces mean more excellent non-migration. Evaluation was made according to the following evaluation criteria. The results are shown in Table 3.

### Evaluation criteria

+: no trace is observed and non-migration is excellent.
±: few traces are observed.
-: many traces are observed and non-migration is poor.
--: too many trace traces are observed and non-migration is very poor.

### <Tensile test>

A plate pressed to 1 mm at 180°C for 5 minutes with a roll-kneaded sheet was made, and subjected to measurement of the tensile strength, the rate of stretching and the 100% modulus according to JISK7113. The results are shown in Table 3.

### <Heat aging resistance test>

A plate pressed to 1 mm at 180°C for 5 minutes with a roll-kneaded sheet was made, and placed in an oven at 100°C for 120 hours and thereafter subjected to evaluation of the residual stretch rate (%). The results are shown in Table 3.

### <Volatility resistance test>

A plate pressed to 1 mm at 180°C for 5 minutes with a roll-kneaded sheet was made, and placed in an oven at 100°C for 120 hours and thereafter subjected to evaluation of the change in weight (loss by volatilization (%)). It can be said that a smaller amount of loss by volatilization means excellent volatility resistance. The results are shown in Table 3.

### <Oil extraction resistance test>

A plate pressed to 1 mm at 180°C for 5 minutes with a roll-kneaded sheet was made, and immersed in ASTM #2 Oil at 100°C for 96 hours and thereafter subjected to evaluation of change in weight (loss by extraction). When the oil resistance is inferior, extraction in oil is made and the weight is largely decreased. When the oil resistance is excellent, the change in weight is small. The results are shown in Table 3.

### <Compatibility test>

A roll-kneaded sheet was placed under constant temperature and humidity conditions of 40°C × 80% RH, and the presence of bleeding after a lapse of four weeks was visually evaluated. It can be said that less bleeding means more excellent compatibility. Evaluation was made according to the following evaluation criteria.

### Evaluation criteria

+: no bleeding is observed and compatibility is excellent.
±: a little bleeding is observed.
-: much bleeding is observed and compatibility is poor.

**[Table 1]**

| | Polyester-based plasticizer | Dibasic acid component (A) | Glycol component (B) | Hydroxy acid component (C) | End termination component (D) |
|---|---|---|---|---|---|
| Production Example 1 | Polyester-based plasticizer-1 | Sebacic acid 40 (% by mass) | 1,2-Propylene glycol 25 (% by mass) | 12-Hydroxystearic acid 15 (% by mass) | Octanoic acid 20 (% by mass) |
| Production Example 2 | Polyester-based plasticizer-2 | Sebacic acid 30 (% by mass) | 1,2-Propylene glycol 25 (% by mass) | 12-Hydroxystearic acid 12 (% by mass) | Octanoic acid 33 (% by mass) |
| Production Example 3 | Polyester-based plasticizer-3 | Sebacic acid 50 (% by mass) | 1,2-Propylene glycol 25 (% by mass) | 12-Hydroxystearic acid 20 (% by mass) | Octanoic acid 5 (% by mass) |
| Production Example 4 | Polyester-based plasticizer-4 | Sebacic acid 39 (% by mass) | 1,2-Propylene glycol 24 (% by mass) | 12-Hydroxystearic acid 15 (% by mass) | Dodecanoic acid 22 (% by mass) |

**[Table 2]**

| | Number average molecular weight | Acid value | Hydroxy value | Viscosity (mPa·S) |
|---|---|---|---|---|
| Production Example 1 | 1970 | 0.40 | 10.6 | 500 |
| Production Example 2 | 1340 | 0.31 | 14.2 | 150 |
| Production Example 3 | 4220 | 0.23 | 17.3 | 5000 |
| Production Example 4 | 2000 | 0.47 | 7.3 | 500 |

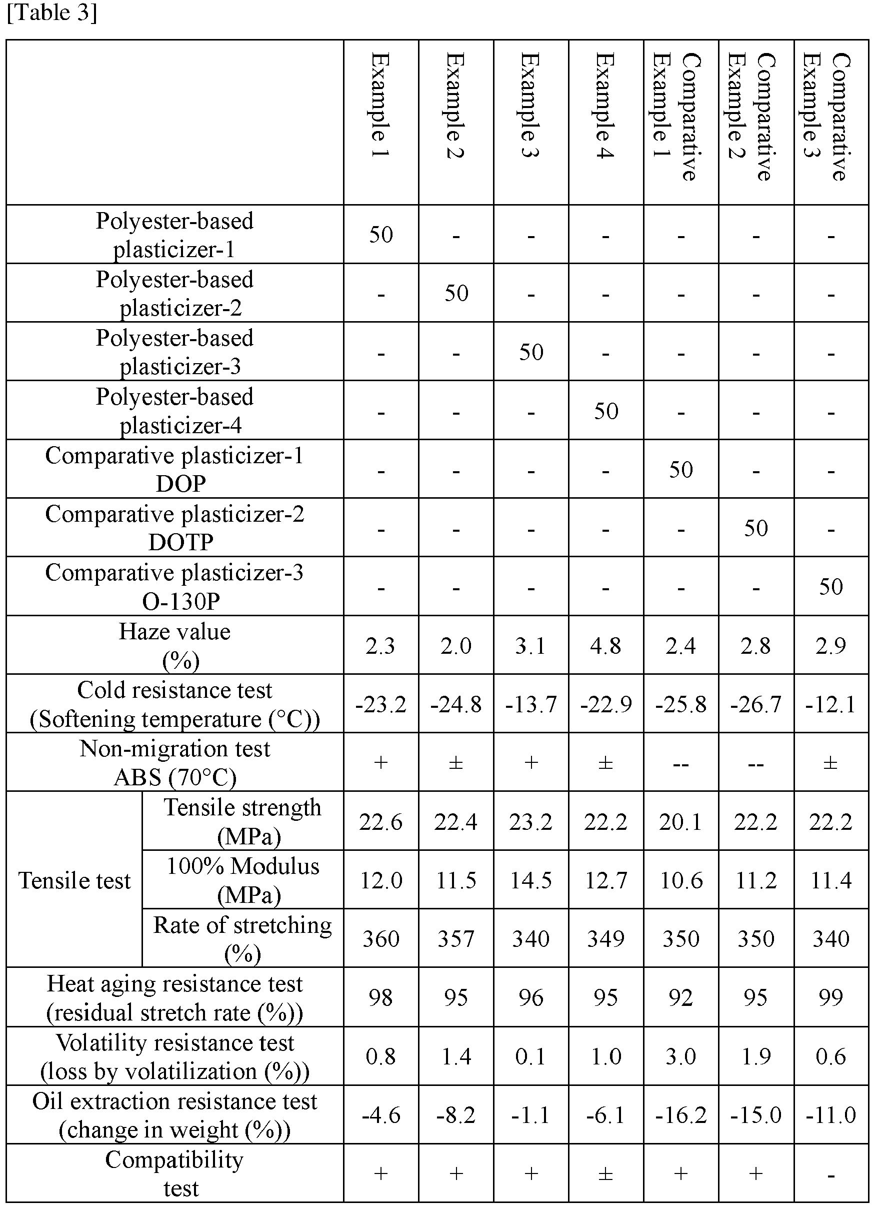

It is clear from the results in Tables 1 to 3 that the polyester-based plasticizer of the present invention is excellent in performance balance and excellent particularly in cold resistance, non-migration, oil extraction resistance, and volatility resistance. It is also clear that the vinyl chloride-based resin composition of the present invention is excellent in performance balance and excellent particularly in cold resistance, non-migration, oil extraction resistance, and volatility resistance, and furthermore can provide a molded article excellent in transparency.

## Claims

1. A polyester-based plasticizer obtained from a dibasic acid component (A), a glycol component (B), a hydroxy acid component (C), and an end termination component (D), wherein
the dibasic acid component (A) is one or more selected from the group consisting of sebacic acid, azelaic acid, and succinic acid,
the glycol component (B) is one or more selected from the group consisting of 1,2-propylene glycol, 1,3-propylene glycol, 1,3-butanediol, and 1,4-butanediol,
the hydroxy acid component (C) is 12-hydroxystearic acid, and
the end termination component (D) is one or more selected from the group consisting of a monovalent fatty acid having 8 to 12 carbon atoms and a linear monohydric alcohol having 6 to 10 carbon atoms.

2. The polyester-based plasticizer according to claim 1, wherein the glycol component (B) is 1,2-propylene glycol.

3. The polyester-based plasticizer according to claim 1 or 2, wherein a number average molecular weight is 500 to 10,000.

4. The polyester-based plasticizer according to any one of claims 1 to 3, wherein the dibasic acid component (A), the glycol component (B), the hydroxy acid component (C), and the end termination component (D) are obtained from a biomass resource.

5. A vinyl chloride-based resin composition comprising the polyester-based plasticizer according to any one of claims 1 to 4.

6. The vinyl chloride-based resin composition according to claim 5, wherein the composition is used in a food packaging application or an oil-resistant hose application.

7. A molded article comprising the vinyl chloride-based resin composition according to claim 5 or 6.

8. A molded article according to claim 7, wherein the molded article is a food packaging film or an oil-resistant hose.
